(19) Europäisches Patentamt
European Patent Office
Office européen des brevets

(11) **EP 4 671 749 A1**

(12) **EUROPEAN PATENT APPLICATION**

(43) Date of publication:
**31.12.2025 Bulletin 2026/01**

(21) Application number: **25182810.9**

(22) Date of filing: **13.06.2025**

(51) International Patent Classification (IPC):
*G01N 23/203* (2006.01)

(52) Cooperative Patent Classification (CPC):
**G01N 23/203**; G01N 2223/053

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **26.06.2024 JP 2024102820**

(71) Applicant: **Jeol Ltd.**
**Akishima-shi, Tokyo 196-8558 (JP)**

(72) Inventors:
• IKITA, Konomi
  **Tokyo, 196-8558 (JP)**
• TSUTSUMI, Kenichi
  **Tokyo, 196-8558 (JP)**

(74) Representative: **Boult Wade Tennant LLP**
**Salisbury Square House**
**8 Salisbury Square**
**London EC4Y 8AP (GB)**

(54) **EVALUATION METHOD AND ANALYZER APPARATUS**

(57)     There is provided an evaluation method of evaluating the density of a sample (S). The evaluation method starts with acquiring (S118) a backscattered electron spectrum from the sample (S). Then, an elastically scattered peak of the spectrum is separated (S120) into a plurality of minor peaks by waveform separation. Information about the positions and widths of the minor peaks is derived. The chemical elements making up the sample (S) are identified (S122) from the positions and widths of the minor peaks.

FIG. 1

EP 4 671 749 A1

**Description**

BACKGROUND OF THE INVENTION

1. Field of the Invention

The present invention relates to a method of evaluating materials and also to an analyzer apparatus for use in such a method.

2. Description of the Related Art

Backscattered electron imaging is one type of material evaluation technique utilizing backscattered electrons. A backscattered electron image is obtained by scanning a sample with an electron beam, detecting electrons reflected off the sample during the scanning, and displaying a distribution of the intensities of the detected electrons. For example, Patent document 1 discloses a scanning electron microscope equipped with a backscattered electron detector for acquiring backscattered electron images.

Citation List

Patent Documents

Patent document 1: JP-A-2008-123990
With the backscattered electron imaging, it is easy to evaluate the compositions of samples using backscattered electrons. However, with this technique, it is impossible to evaluate the densities of samples. Consequently, there is a need for a technique capable of evaluating the densities of samples.

SUMMARY OF THE INVENTION

One aspect of the evaluation method associated with the present invention comprises the steps of:

acquiring a backscattered electron spectrum of a sample;

separating an elastically scattered peak of the backscattered electron spectrum into a plurality of minor peaks by waveform separation and obtaining information about positions and widths of the minor peaks; and

identifying chemical elements making up the sample from the positions and widths of the minor peaks.

With this evaluation method, it is possible to identify chemical elements making up the sample from the backscattered electron spectrum.
One aspect of the analyzer apparatus associated with the present invention comprises an electron optical system for directing an electron beam at a sample, an electron energy analyzer for spectrally dispersing and detecting backscattered electrons emitted from the sample, and a controller for controlling the electron optical system. The controller performs the steps of: acquiring a backscattered electron spectrum of the sample; separating an elastically scattered peak of the backscattered electron spectrum into a plurality of minor peaks by waveform separation and obtaining information about positions and widths of the minor peaks; and identifying chemical elements making up the sample from the positions and widths of the minor peaks.
With this analyzer apparatus, it is possible to identify chemical elements making up the sample from the backscattered electron spectrum.

BRIEF DESCRIPTION OF THE DRAWINGS

FIG. 1 is a schematic view showing the configuration of an analyzer apparatus associated with a first embodiment of the present invention.
FIG. 2 is a flowchart illustrating one example of method of evaluating the density of a sample.
FIG. 3 is a correlation diagram illustrating a relationship between atomic number and elastically scattered peak position.

FIG. 4 is a correlation diagram illustrating a relationship between atomic number and elastically scattered peak width.

FIG. 5 is a correlation diagram illustrating a relationship between atomic number and elastically scattered peak intensity.

FIG. 6 is a correlation diagram illustrating a relationship between atomic number and element density.

FIG. 7 is a graph showing one example of approximate curve showing a relationship between atomic number and elastically scattered peak position.

FIG. 8 is a graph showing one example of approximate curve showing a relationship between atomic number and elastically scattered peak width.

FIG. 9 is a graph of an elastically scattered peak emanating from a sample under analysis, illustrating one example of process in which the waveform of the peak has been separated into its components.

FIG. 10 is a flowchart illustrating one example of processing sequence of a controller for density evaluation.

FIG. 11 illustrates a spectral image.

DETAILED DESCRIPTION OF THE INVENTION

The preferred embodiments of the present invention are hereinafter described in detail with reference to the drawings. It is to be understood that the embodiments provided below are not intended to unduly restrict the scope and content of the present invention delineated by the appended claims and that not all the configurations described below are essential constituent components of the invention.

1. First Embodiment

1.1. Analyzer Apparatus

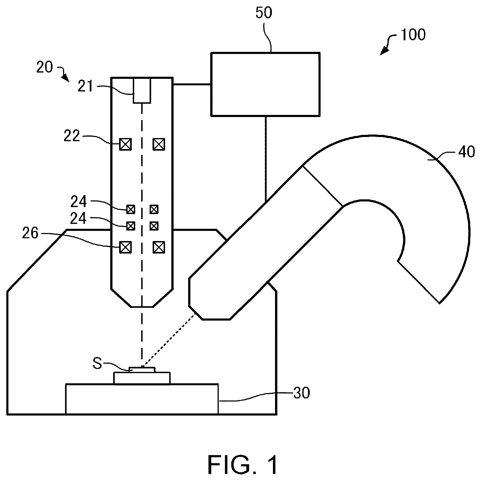

An analyzer apparatus associated with a first embodiment is first described by referring to FIG. 1, which shows one example of configuration of the analyzer apparatus, 100, associated with the first embodiment. As shown, the analyzer apparatus 100 includes an electron optical system 20, a sample stage 30, an electron energy analyzer 40, and a controller 50. For example, the analyzer apparatus 100 is a scanning electron microscope equipped with the electron energy analyzer 40.

The electron optical system 20 is used to emit an electron beam at a sample S. With the electron optical system 20, it is possible that the electron beam strikes only one point on the sample S. Furthermore, the electron optical system 20 is capable of focusing the electron beam into an electron probe and of scanning the sample S with the electron probe. The electron optical system 20 includes an electron source 21, condenser lenses 22, deflectors 24, and an objective lens 26.

The electron source 21 emits the electron beam. For example, the electron source 21 is an electron gun which emits such an electron beam by accelerating electrons emitted from a cathode by means of an accelerating voltage applied between the cathode and an anode.

The condenser lenses 22 and the objective lens 26 together focus the electron beam emanating from the electron source 21 into the electron probe. The deflectors 24 provide two-dimensional deflection of the electron beam focused by the condenser lenses 22 and objective lens 26. The sample S can be scanned with the electron probe by deflecting the electron beam by the deflectors 24.

The sample stage 30 mechanically holds the sample S and is equipped, for example, with a horizontal drive mechanism for moving the sample S horizontally, a vertical drive mechanism for moving the sample S in a heightwise direction, and a tilting mechanism for tilting the sample S. The sample S can be placed in position by the sample stage 30.

The electrons emitted from the sample S in response to the irradiation with the electron beam are dispersed in energy and detected by the electron energy analyzer 40. The electron energy analyzer 40 is an electrostatic semispherical analyzer, for example, which has an inner semispherical electrode, an outer semispherical electrode, and a detector. A voltage is applied between the inner and outer electrodes. Electrons in an energy range corresponding to the applied voltage can be entered into the detector by varying the applied voltage. An energy spectrum can be obtained by counting the number of electrons detected by the electron energy analyzer 40 for each energy level.

The electron energy analyzer 40 is not restricted to an electrostatic semispherical analyzer as long as it can spectrally disperse electrons emanating from the sample S and produce an energy spectrum. For example, the electron energy analyzer 40 may be a cylindrical mirror analyzer (CMA) or a plane mirror analyzer (PMA).

The computer controller 50 controls various portions of the analyzer apparatus 100, such as the electron optical system 20, sample stage 30, and electron energy analyzer 40. The controller 50 includes a processor (such as a CPU (central processing unit) or a DSP (digital signal processor)) and a storage section that includes a RAM (random access memory) and a ROM (read only memory). The controller 50 performs various calculational operations and various control operations by executing programs in the storage section by the processor.

1.2. Evaluation Method

1.2.1. Principle

In the evaluation method of the first embodiment, a backscattered electron spectrum can be acquired using the analyzer apparatus 100 and chemical elements making up the sample S can be qualitatively evaluated using the acquired spectrum. Furthermore, in this evaluation method of the first embodiment, it is possible to make a comparative evaluation of the densities of the elements of the sample S using the acquired backscattered electron spectrum.

Electrons incident on a sample are reflected rearwardly and eject from the surface of the sample. These electrons are referred to as backscattered electrons. An elastically scattered peak in a backscattered electron spectrum represents the intensity of elastically scattered electrons. Elastic scattering is a phenomenon in which electrons incident on a sample collide with atoms and are scattered without energy loss. The elastically scattered peak represents the intensity of these electrons, or zero loss peak, which are scattered without energy loss.

If incident electrons collide with atoms of a sample and the sample atoms undergo an impulse, i.e., the product of force and time, then the incident electrons lose their energies. Therefore, the position and width (energy position and energy width) of the elastically scattered peak vary according to the masses of the atoms making up the sample. Utilizing this principle, in the evaluation method of the first embodiment, the elements making up the sample are identified from the position and width of the elastically scattered peak.

The intensities of elastically scattered peaks are affected not only by atomic numbers or an average atomic number but also by the densities of elements making up the sample. Utilizing this principle, in the evaluation method of the first embodiment, the densities of the elements making up the sample are evaluated from the intensity of the elastically scattered peak.

1.2.2. Flow of Evaluation Method

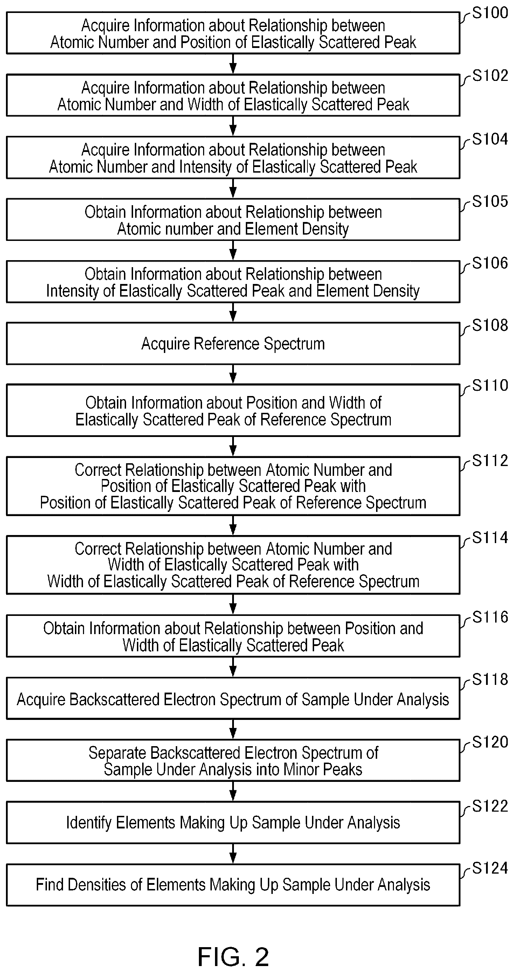

FIG. 2 is a flowchart illustrating one example of a method of evaluating the density of a sample in the first embodiment. First, information about a relationship between atomic number and elastically scattered peak position is obtained (step S100).

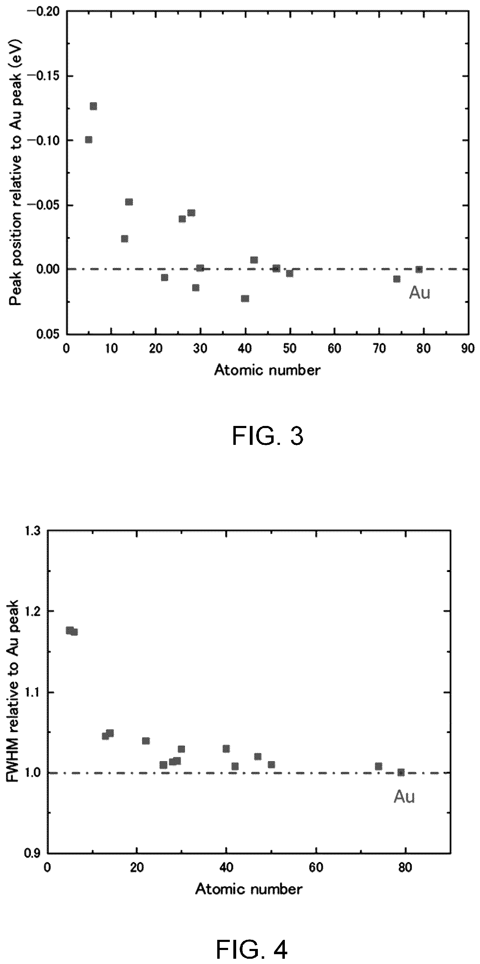

FIG. 3 is a correlation diagram illustrating a relationship between atomic number and elastically scattered peak position. As described previously, the position (hereinafter may be simply referred to as the peak position) of the elastically scattered peak in a backscattered electron spectrum shifts according to the masses of atoms making up the sample. A method of generating the correlation diagram of FIG. 3 is described below.

First, a backscattered electron spectrum of a sample whose atomic number is known is produced. In particular, an electron beam is directed at the sample through the electron optical system 20. Only backscattered electrons out of electrons emitted from the sample are spectrally dispersed by the electron energy analyzer 40 and a backscattered electron spectrum is produced.

Then, information about the position of the elastically scattered peak is obtained from the backscattered electron spectrum of the sample whose atomic number is known. The position of the peak can be found by fitting the elastically scattered peak to a Gaussian function, Gauss-Lorentz function, or other mathematical function.

The acquisition of the backscattered electron spectrum and of information about the position of the elastically scattered peak is done repeatedly while varying the detected one of the elements constituting the sample. As a result, a correlation diagram between atomic number and peak position as shown in FIG. 3 can be generated. In the correlation diagram of FIG. 3, the position of the elastically scattered peak of gold (Au) with atomic number 79 is used as a reference. That is, the position indicative of atomic number 79 is set to zero.

Then, information about a relationship between atomic number and elastically scattered peak width is obtained (step S102). FIG. 4 is a correlation diagram illustrating a relationship between atomic number and elastically scattered peak width (full width at half maximum (FWHM)). The peak width of elastic scattering varies according to the mass of each atom making up the sample. In this diagram, the peak width is given in FWHM.

A method of generating the correlation diagram of FIG. 4 is described below. Only the differences with the above-described method of generating the correlation diagram of FIG. 3 illustrating a relationship between atomic number and peak position are described; a description of similarities is omitted.

First, a backscattered electron spectrum is derived from a sample having a known atomic number. Then, information about the width of the elastically scattered peak is obtained from the backscattered electron spectrum of the sample with the known atomic number. The peak width can be found by fitting the elastically scattered peak to a Gaussian function, a Gauss-Lorentz function, or other mathematical function. The acquisition of the backscattered electron spectrum and of information about the position of the elastically scattered peak is done repeatedly for a plurality of samples having different primary constituent elements. As a result, a correlation diagram of FIG. 4 illustrating a relationship between atomic number and peak width can be generated. This correlation diagram of FIG. 4 is based on the elastically scattered peak width of gold (Au) with atomic number 79. That is, the peak width of atomic number 79 is set to 1.

The backscattered electron spectrum of the sample with a known atomic number may be a backscattered electron spectrum of a known sample used to acquire information about a relationship between atomic number and peak position in step S100.

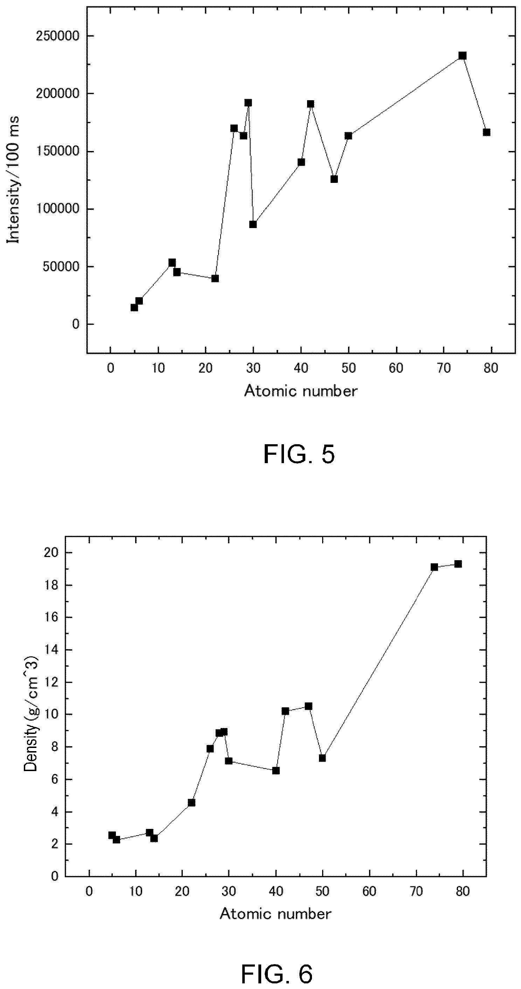

Then, information about a relationship between atomic number and elastically scattered peak intensity is obtained (step S104). FIG. 5 is a correlation diagram illustrating a relationship between atomic number and elastically scattered peak intensity. The peak intensity varies according to the mass of each atom making up the sample. A method of generating the correlation diagram of FIG. 5 is described below. There are described only differences with the method of generating the correlation diagram of FIG. 3 illustrating a relationship between atomic number and peak position. A description of similarities is omitted.

First, a backscattered electron spectrum is acquired from a sample with a known atomic number. Then, information about the intensity of the elastically scattered peak is derived from the backscattered electron spectrum of the sample with the known atomic number. The acquisition of the backscattered electron spectrum and of information about the position of the elastically scattered peak is done repeatedly for a plurality of samples having different primary constituent elements. As a result, the correlation diagram of FIG. 5 illustrating a relationship between atomic number and peak intensity can be created.

The backscattered electron spectrum of the sample with a known atomic number may be a backscattered electron spectrum of a known sample used to acquire information about a relationship between atomic number and peak position in step S100.

Then, information about a relationship between atomic number and chemical element density is obtained (step S105). FIG. 6 is a correlation diagram illustrating the relationship between atomic number and element density. This relationship between atomic number and element density can be obtained from literature values.

Information about a relationship between peak intensity and element density is then obtained (step S106). The correlation diagram of FIG. 5 is mathematized by a linear approximation and a function representing a relationship between atomic number and peak intensity is found. Similarly, the correlation diagram of FIG. 6 is mathematized by a linear approximation and a function representing a relationship between atomic number and element density is found. Formulas interrelating the peak intensity and the element density can be found from these two functions. Although linear approximations are used herein, there is no restriction on the methods of finding these two functions.

In the example of FIGS. 5 and 6, the relationship between the element density D and the elastically scattered peak intensity I is given by

$$D = 7.2 \times 10^{-5}\, I \qquad\qquad (1)$$

Then, a reference spectrum is acquired (step S108). The reference spectrum is a backscattered electron spectrum of a reference sample made of an element whose atomic number is known. A heavy chemical element having a relatively large atomic number is used as the reference sample. For example, a pure element whose atomic number is greater than 10 is used as the reference sample. In this example, gold (Au) is used as the reference sample.

Then, information about the position and width of the elastically scattered peak of the reference spectrum is derived (step S110). The position and width of the peak are found by fitting the reference spectrum to a Gaussian function, Gauss-Lorentz function, or other mathematical function. The width of the elastically scattered peak is given in FWHM, for example. As long as information about the position and width of the elastically scattered peak can be obtained, no restrictions are impressed on the fitting method.

Then, the relationship between atomic number and peak position is corrected at the position of the elastically scattered peak of the reference spectrum (step S112). The relationship between atomic number and peak position as illustrated in FIG. 3 is corrected, using the information about the position of the elastically scattered peak of the reference spectrum obtained at step S110. Since the atomic number of the reference sample is known, the correlation diagram of FIG. 3 can be corrected using the position of the elastically scattered peak of the reference sample. Where gold (Au) is used as the reference sample, the correlation diagram is so corrected that the position of the peak of gold with atomic number 79 of FIG. 3 corresponds to the position of the peak obtained at step S110.

The position of the elastically scattered peak varies due to variations of the characteristics of the electron source 21 caused by external factors such as the temperature at the time of measurement. The effects of variations of the characteristics of the electron source 21 due to the external factors can be reduced by correcting the correlation diagram of FIG. 3 by the use of the position of the elastically scattered peak of the reference sample made of gold (Au).

The relationship between atomic number and peak width is next corrected with the width of the elastically scattered peak of the reference sample (step S114).

The relationship between atomic number and peak width is corrected using the information about the width of the elastically scattered peak of the reference spectrum obtained at step S110. Because the atomic number of the reference sample is known, the correlation diagram of FIG. 4 can be corrected using the width of the elastically scattered peak of the reference sample. Where gold (Au) is used as the reference sample, the correlation diagram of FIG. 4 is so corrected that the peak width of gold having atomic number 79 corresponds to the peak width obtained at step S110. Consequently, the effects of variations of the characteristics of the electron source 21 due to external factors can be reduced.

Then, information about the relationship between the position and width of the elastically scattered peak is obtained (step S116). In this example, a function indicating a relationship between peak position and peak width is found as information about this relationship and can be generated from both the information about the relationship between atomic number and peak position and the information about the relationship between atomic number and peak width.

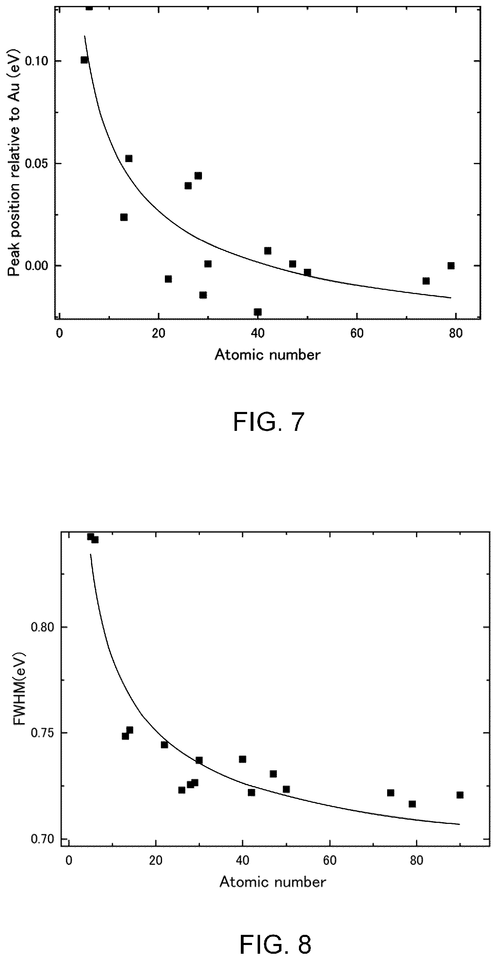

FIG. 7 is a graph showing one example of approximate curve indicating a relationship between atomic number and peak position. FIG. 8 is a graph showing one example of approximate curve indicating a relationship between atomic number and peak width. In FIGS. 7 and 8, actual measurement values are indicated by dotted lines, while approximate curves are indicated by solid lines.

As shown in FIG. 7, an approximate curve is drawn across the correlation diagram that has been corrected with the reference spectrum, and a function indicating a relationship between atomic number and peak position is found. Similarly, as shown in FIG. 8, an approximate curve is drawn across the correlation diagram that has been corrected with the reference spectrum, and a function indicating a relationship between atomic number and peak width is found. A function indicating a relationship between peak position and peak width is calculated from these two found functions.

In the example shown in FIGS. 7 and 8, a function inversely proportional to the square root of atomic number is used as a function indicating an approximate function. Other functions may also be used.

In the foregoing example, a function is generated to represent information about the relationship between peak position and peak width. Actual measurement values may also be used to represent a relationship between peak position and peak width. For example, using the correlation diagrams of FIGS. 3 and 4, actual measurement values of the position of the elastically scattered peak and actual measurement values of the peak width are made to correspond to each other in a one-to-one relationship, thus producing information about a relationship between peak position and peak width.

Then, a backscattered electron spectrum is derived from a sample to be analyzed (step S118). Specifically, in the same manner as for the reference spectrum, an electron beam is directed at the sample through the electron optical system 20. Backscattered electrons out of electrons released from the sample are spectrally dispersed by the electron energy analyzer 40, whereby a backscattered electron spectrum is generated.

Then, the elastically scattered peak of the backscattered electron spectrum of the sample under analysis is separated into a plurality of minor peaks by waveform separation, and information about the positions, widths, and intensities of the minor peaks is derived (step S120).

An elastically scattered peak is an ensemble of elastically scattered peaks from elements making up a sample to be analyzed. Therefore, the former elastically scattered peak is separated into the latter peaks, or minor peaks, by waveform separation, and the abundance ratios, positions, and widths (FWHM) of the minor peaks from the elements are computed. The separation of the former elastically scattered peak is done under the restrictive condition for a relationship obtained at step S116 regarding between peak position and peak width. That is, the former elastically scattered peak is separated into individual minor peaks by waveform separation so as to satisfy the relationship given at step S116 regarding between peak position and peak width. A function representing the relationship between the position and width of the peak or actual measurement values may be used.

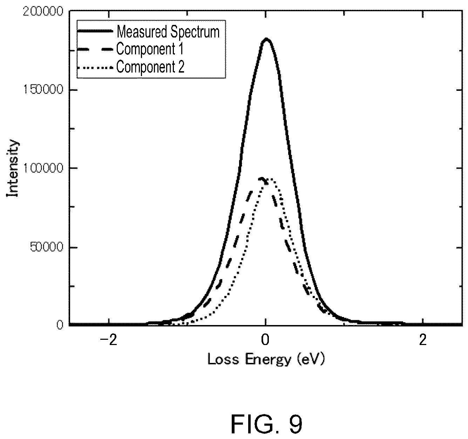

FIG. 9 is a graph showing one example of result of a waveform separation of the elastically scattered peak from the sample under analysis. In this example of FIG. 9, the elastically scattered peak is a synthesis of two minor peaks and thus is separated into peak components 1 and 2, or the minor peaks, by waveform separation. Consequently, information about the positions, widths, and intensities of the peak components 1 and 2 can be obtained. Furthermore, information about the abundance ratio of the peak components 1 and 2 can be obtained from the intensity ratio of the peak components 1 and 2.

The position and width of the peak component 1 shown in FIG. 9 are made to satisfy the relationship derived at step S116 regarding a relationship between peak position and peak width by waveform separation of the elastically scattered peak under the restricting condition set at step S116 regarding this relationship. Similarly, the position and width of the peak component 2 satisfy the relationship set at step S116 regarding between peak position and peak width.

Then, the elements making up the sample under analysis are identified from the positions and widths of the minor peaks derived by waveform separation from the elastically scattered peak of the sample under analysis (step S122).

More specifically, the elements making up the sample under analysis are identified from the positions and widths of the minor peaks based either on a relationship between atomic number and peak position or on a relationship between atomic number and peak width. For example, the elements are identified by finding atomic numbers from the peak positions using the scatter chart of FIG. 3 illustrating a relationship between atomic number and peak position, the chart being based on actual measurement values. Alternatively, the elements may be identified by finding atomic numbers from the peak widths using the scatter chart of FIG. 4 illustrating a relationship between atomic number and peak width, the chart being based on actual measurement values. Additionally, the elements making up the sample under analysis may be identified using either a function describing a relationship between atomic number and peak position or a function describing a relationship between atomic number and peak width.

In the example of FIG. 9, it can be estimated that the sample under analysis is made up of two elements, Si and C, as a result of the waveform separation of the elastically scattered peak. Furthermore, as a result of the waveform separation of the peak, it can be estimated that Si and C exist in a 1:1 abundance ratio.

Then, the densities of the elements making up the sample are found from the intensities of the minor peaks obtained by waveform separation of the elastically scattered peak of the sample under analysis (step S124).

The densities of the elements are found from the intensities of the minor peaks based on information about a relationship between element density and peak intensity derived at step S106. For example, the densities of the elements can be calculated by substituting the intensities of the minor peaks obtained at step S120 into the equation (1) found at step S106 regarding a relationship between element density and peak intensity. The densities of the elements making up the sample under analysis relative to their theoretical densities can be known by comparing the calculated densities to the theoretical densities of the elements. Because of the process steps described so far, the densities of the elements making up the sample under analysis can be evaluated.

An elastically scattered peak arises from a phenomenon in which incident electrons are scattered (i.e., varied in direction) without losing their energy when colliding with sample atoms. Therefore, the backscattered electron spectrum used in step S100, the backscattered electron spectrum used at step S102, the backscattered electron spectrum used in step S104, the backscattered electron spectrum (reference spectrum) used in step S106, and the backscattered electron spectrum produced from the sample under analysis and used in step S118 are preferably measured at the same accelerating voltage and at the same tilt angle.

Because an elastically scattered peak arises from a phenomenon in which incident electrons are scattered (i.e., varied in direction) without losing their energy when colliding with sample atoms, if the accelerating voltage and the tilt angle of the sample vary, the ratio of the intensity of the elastically scattered peak to the intensity of the incident electrons varies. This ratio is referred to as the backscattered electron coefficient. That is, if the accelerating voltage and the tilt angle of the sample vary, the position, shape, and intensity of the elastically scattered peak will vary. Therefore, the backscattered electron spectra used in the above-described steps S100, S102, S104, S106, and S118 are preferably measured at the same accelerating voltage and at the same tilt angle. Those parameters which can be corrected such as the electrical current of the electron beam impinging on the sample may be different among the measurements of the backscattered electron spectra used in the above process steps.

### 1.3. Processing Sequence

In the analyzer apparatus 100, the controller 50 performs a processing sequence for evaluating the densities of the elements making up the sample under analysis. Various kinds of information including information about a relationship between atomic number and peak position as shown in FIG. 3, information about a relationship between atomic number and peak width as shown in FIG. 4, and information about a relationship between peak intensity and element density are previously stored in the storage section of the controller 50.

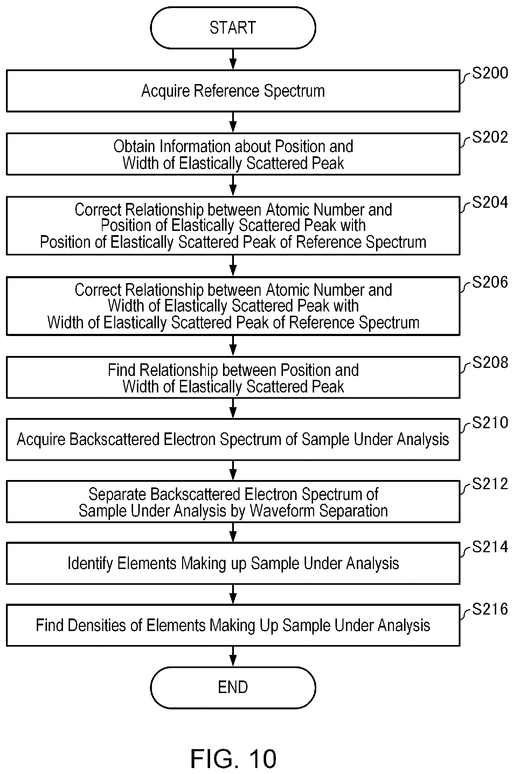

FIG. 10 is a flowchart illustrating one example of the processing sequence performed by the controller 50 to evaluate element densities. A description of items similar to those of the evaluation method illustrated in the foregoing FIG. 2 is omitted.

If an instruction to start a processing sequence for a density evaluation is received from a user, the controller 50 measures the reference sample and acquires a reference spectrum (step S200). Specifically, the controller 50 controls the electron optical system 20 such that an electron beam impinges on the reference sample. Consequently, the electron energy analyzer 40 generates a backscattered electron spectrum, which in turn is sent to the controller 50. As a result, the controller 50 can acquire the reference spectrum.

The controller 50 fits the acquired reference spectrum to a Gaussian function or other function, finds the position and width of the resulting, elastically scattered peak, and acquires information about the position and width of the elastically scattered peak (step S202).

Then, the controller 50 corrects the relationship between atomic number and peak position with the position of the elastically scattered peak of the reference spectrum, the relationship being stored in the storage section (step S204). Subsequently, the controller 50 corrects the relationship between atomic number and peak width with the width of the elastically scattered peak of the reference spectrum, the relationship being stored in the storage section (step S206).

The controller 50 finds a relationship between the position and width of the elastically scattered peak from both the corrected relationship between atomic number and peak position and the corrected relationship between atomic number and peak width (step S208).

Then, the controller 50 derives a backscattered electron spectrum of the sample under analysis in the same manner as in the step S200 of acquiring a reference spectrum (step S210). In a measurement of a backscattered electron spectrum of the sample under analysis, the accelerating voltage and sample tilt angle are set by the controller 50 equal to the accelerating voltage and tilt angle at which a backscattered electron spectrum of a reference sample is measured at step S200.

As shown in FIG. 9, the controller 50 separates the elastically scattered peak of the backscattered electron spectrum of the sample under analysis into a plurality of minor peaks by waveform separation and obtains information about the positions, widths, and intensities of the minor peaks (step S212). The controller 50 performs the waveform separation of the elastically scattered peak under a restricting condition regarding the relationship between peak width and peak position. The controller 50 computes the positions, widths, and intensities of the minor peaks.

The controller 50 identifies the elements making up the sample under analysis from the positions and widths of the minor peaks produced by the waveform separation (step S214). For example, the controller 50 identifies the elements by finding the atomic numbers from the positions of the minor peaks on the scatter chart of FIG. 3 illustrating a relationship between atomic number and peak position. Alternatively, the controller 50 may identify the elements by finding the atomic numbers from the widths of the minor peaks on the scatter chart of FIG. 4 illustrating a relationship between atomic number and peak width. Furthermore, the controller 50 finds the abundance ratios of the elements from the results of the waveform separation.

The controller 50 finds the densities of the elements making up the sample under analysis from the intensities of the minor peaks obtained by the waveform separation (step S216). In particular, the controller 50 finds the densities of the elements from the intensities of the minor peaks using information about a relationship between atomic number and element density, the information being stored in the storage section. For example, the controller 50 finds the densities of the elements by substituting the intensities of the minor peaks into the equation (1) above, the equation describing a relationship between element density and peak intensity and stored in the storage section. After performing the step S216 for finding the densities, the controller 50 ends the processing sequence for density evaluation.

## 1.4. Advantageous Effects

The evaluation method of the first embodiment comprises the steps of: acquiring a backscattered electron spectrum of a sample; separating an elastically scattered peak of the backscattered electron spectrum into a plurality of minor peaks by waveform separation; obtaining information about positions, widths, and intensities of the minor peaks; identifying chemical elements making up the sample from the positions and widths of the minor peaks; and finding densities of the chemical elements making up the sample from the intensities of the minor peaks. Therefore, in the evaluation method of the first embodiment, the elements making up the sample can be identified from the backscattered electron spectrum. Furthermore, with the evaluation method of the first embodiment, the density of the sample can be evaluated.

For example, the composition of the sample can be evaluated using the backscattered electron image which is generated by detecting backscattered electrons emitted from the sample while scanning the sample with an electron beam. The backscattered electron image represents a distribution of intensities of the backscattered electrons. However, the intensities of the backscattered electrons are affected by average atomic number, crystal orientation, and density and, therefore, it is impossible to evaluate the composition of the sample accurately.

For example, in reflection electron energy-loss spectroscopy (REELS), inelastically scattered electrons which lose parts of their energies due to interaction with a sample are spectrally dispersed, an energy-loss spectrum is acquired, and the composition of the sample is accessed from the loss peaks of the spectrum. However, the loss peaks of the energy-loss spectrum have only low intensities. In contrast, a backscattered electron spectrum generated by spectrally dispersing elastically scattered electrons has an elastically scattered peak intensity, or a zero loss peak, greater than loss peaks. Therefore, in the evaluation method of the first embodiment, the composition and density of the sample can be evaluated more precisely.

The evaluation method of the first embodiment involves the step of acquiring information about a relationship between the position and width of the elastically scattered peak. In the step of waveform separation, a relationship between the position and width of the elastically scattered peak creates a restricting condition. Therefore, in the evaluation method of the first embodiment, the elastically scattered peak of the sample can be precisely separated into plural minor peaks by waveform separation. Consequently, the elements making up the sample under analysis can be identified precisely. Also, the density of the sample can be evaluated precisely.

The evaluation method of the first embodiment comprises the steps of: acquiring a backscattered electron spectrum of a sample having a known atomic number and using the backscattered electron spectrum as a reference spectrum; finding position and width of an elastically scattered peak of the reference spectrum; correcting a relationship between atomic number and peak position with the position of the elastically scattered peak of the reference spectrum; and correcting a relationship between atomic number and peak width with the width of the elastically scattered peak of the reference spectrum. In the step of acquiring information about a relationship between position and width of the elastically scattered peak, a relationship between position and width of the elastically scattered peak is found from both the corrected relationship between atomic number and elastically scattered peak position and the corrected relationship between atomic number and elastically scattered peak width. Therefore, in the evaluation method of the first embodiment, the effects of the characteristics of the electron source 21 on the position and width of the elastically scattered peak can be reduced. Thus, the elements making up the sample can be identified precisely. Also, the density of the sample can be evaluated more precisely.

The analyzer apparatus 100 includes the electron optical system 20 through which an electron beam is directed at a sample, the electron energy analyzer 40 for spectrally dispersing and detecting backscattered electrons emitted from the sample, and the controller 50 for controlling the electron optical system 20. Furthermore, the controller 50 performs the steps of: acquiring a backscattered electron spectrum of the sample; separating an elastically scattered peak of the backscattered electron spectrum into a plurality of minor peaks by waveform separation and obtaining information about positions, widths, and intensities of the minor peaks; identifying chemical elements making up the sample from the positions and widths of the minor peaks; and finding densities of the chemical elements making up the sample from the intensities of the minor peaks. Therefore, the analyzer apparatus 100 can identify the elements making up the sample from the backscattered electron spectrum. In addition, the analyzer apparatus 100 can evaluate the density of the sample.

1.5. Modifications

1.5.1. First Modification

In the above embodiment, a relationship between atomic number and peak position and a relationship between atomic number and peak width are corrected using a reference spectrum. However, these two relationships do not need to be corrected. That is, the step S108 of acquiring the reference spectrum of FIG. 2, the step S110 of acquiring information about the position and width of the elastically scattered peak of the reference spectrum, the step S112 of correcting the relationship between atomic number and peak position, and the step S114 of correcting the relationship between atomic number and peak width do not need to be corrected. Similarly, the controller 50 does not need to perform any of the step S200 of acquiring the reference spectrum of FIG. 10, the step S202 of obtaining information about the position and width of the elastically scattered peak of the reference spectrum, the step S204 of correcting the relationship between atomic number and peak position, and the step S206 of correcting the relationship between atomic number and peak width.

1.5.2. Second Modification

In the above embodiment, the steps of the evaluation method are performed in the order given in the flowchart of FIG. 2 but the order in which the steps are carried out can be varied appropriately. Similarly, the order in which the steps illustrated in FIG. 10 are carried out can be changed appropriately.

1.5.3. Third Modification

The above-described embodiment includes the step S124 of finding densities. In this step S124, the densities of elements are computed by substituting the intensities of the minor peaks acquired at step S120 into the equation interrelating the density found at step S106 and the intensity of the elastically scattered peak. Alternatively, the densities may be found by comparing the intensities of the elastically scattered peaks estimated from the elements identified at step S122 and the intensity of the elastically scattered peak of the sample under analysis acquired at step S120. For example, a density may be found based on the difference between the intensity of the elastically scattered peak estimated from the element identified at step S122 and the intensity of the elastically scattered peak of the sample under analysis acquired at step S120. Information about the intensity of the elastically scattered peak estimated from the element identified at step S122 may be derived from actual measurement values on the scatter chart of FIG. 5.

2. Second Embodiment

2.1. Analyzer Apparatus

An analyzer apparatus associated with a second embodiment is next described. This analyzer apparatus is similar in configuration to the analyzer apparatus 100 (FIG. 1) of the first embodiment described above and a description thereof is omitted.

2.2. Evaluation Method

In the second embodiment, the sample under analysis is scanned with an electron beam in a two-dimensional manner, and a backscattered electron spectrum is collected from each point of measurement. Thus, a spectral image or spectral map is produced. A density evaluation is made at each point of measurement on the spectral image. Consequently, a distribution of density in the sample under analysis is visualized.

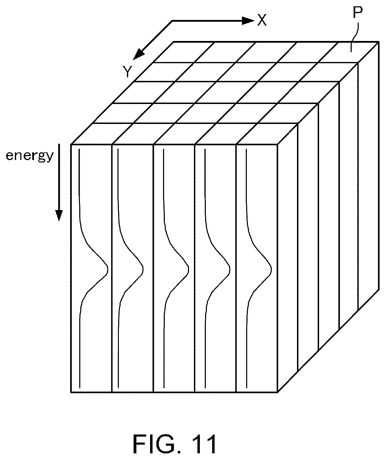

FIG. 11 illustrates the spectral image consisting of data which associate the positions of points of measurement on the sample with the spectrum. The spectral image has a plurality of pixels P whose coordinates (X, Y) correspond to the positions of the points of measurement on the sample. The data points of the backscattered electron spectrum collected at their respective points of measurement on the sample which correspond to the coordinates (X, Y) of the pixels P are stored in the respective pixels P.

The backscattered electron spectrum whose data points are stored in the pixels P of the spectral image are evaluated by the method of FIG. 2. The elements making up the sample are identified for each point of measurement, or each pixel P, and the densities of the elements are found.

Specifically, in the step S118 of acquiring a backscattered electron spectrum of the sample under analysis as shown in FIG. 2, a backscattered electron spectrum is collected from successive points of measurement while scanning the sample under analysis in a two-dimensional manner with an electron beam. Consequently, there can be obtained a spectral image in which the positions of points of measurement on the sample are associated with the backscattered electron spectrum. Data points which are collected at points of measurement on the sample corresponding to the coordinates (X, Y) of the pixels P and which form the backscattered electron spectrum are stored in the pixels P.

In the step S120 of separating the backscattered electron spectrum of the sample under analysis into minor peaks by waveform separation, the elastically scattered peak of the backscattered electron spectrum is separated into minor peaks at each point of measurement, i.e., at each pixel P. Consequently, information about the position, width, and intensity of each minor peak can be acquired for each pixel P.

In the step S122 of identifying the elements making up the sample under analysis, the elements making up the sample are identified for each point of measurement, i.e., for each pixel P, from the positions and widths of the minor peaks. Consequently, the elements making up the sample can be identified for each pixel P.

In the step S124 of finding the densities of the elements making up the sample under analysis, the densities of the elements making up the sample are found from the intensity of the elastically scattered peak of the backscattered electron spectrum for each point of measurement, i.e., for each pixel P.

By finding the densities for each pixel P of the spectral image in this way, an in-plane distribution of density of the sample under analysis can be visualized.

## 2.3. Processing Sequence

In the second embodiment, the controller 50 performs the steps of making a density evaluation of FIG. 10 on the backscattered electron spectrum whose data points are stored in the pixels P of the spectral image. The elements making up the sample are identified for each pixel P, i.e., for each point of measurement, and the densities of the elements are found. This visualizes an in-plane distribution of density of the sample under analysis.

More specifically, in the step S210 of acquiring a backscattered electron spectrum of the sample under analysis, the controller 50 controls the electron optical system 20 to scan the sample under analysis in a two-dimensional manner with an electron beam. A backscattered electron spectrum is collected from the electron energy analyzer 40 for successive points of measurement. Consequently, the controller 50 can acquire a spectral image.

In the step S212 of separating the backscattered electron spectrum of the sample under analysis by waveform separation, the controller 50 separates the elastically scattered peak of the backscattered electron spectrum into minor peaks for each point of measurement, i.e., for each pixel P. As a result, the controller 50 obtains information about the positions, widths, and intensities of the minor peaks for each pixel P.

In the step S214 of identifying the elements making up the sample under analysis, the controller 50 identifies the elements making up the sample from the positions and widths of the minor peaks for each point of measurement, i.e., for each pixel P.

In the step S216 of finding the densities of the elements making up the sample under analysis, the controller 50 finds the densities of the elements of the sample from the intensity of the elastically scattered peak of the backscattered electron spectrum for each point of measurement, i.e., for each pixel P. Because of the processing sequence described thus far, the controller 50 generates an image representing an in-plane distribution of density of the sample.

## 2.4. Advantageous Effects

The evaluation method of the second embodiment includes the step of acquiring a backscattered electron spectrum. In this step, there is obtained a spectral image in which the positions of points of measurement on a sample are associated with the backscattered electron spectrum. The method also includes the step of performing a waveform separation. In this step, the elastically scattered peak of the backscattered electron spectrum is separated into minor peaks for each point of measurement. Furthermore, the method includes the step of identifying the elements making up the sample. In this step, the elements are identified for each point of measurement. Further, the method includes the step of finding the densities of the elements making up the sample. In this step, the densities of the elements are found for each point of measurement. Therefore, with the evaluation method of the second embodiment, an image representing an in-plane distribution of density of the sample can be generated.

Accordingly, with the evaluation method of the second embodiment, a distribution of hydrogen within a sample can be indirectly evaluated, for example, from an image representing an in-plane distribution of density of the sample. Those portions of the sample which contain hydrogen atoms are smaller in density than those not containing hydrogen atoms. Therefore, a distribution of hydrogen can be evaluated indirectly from an image representing an in-plane distribution of density of the sample. For example, in a hydrogen storage metal, those portions occluding hydrogen have lower densities. Therefore, by generating an image representing an in-plane distribution of density using the evaluation method of the second embodiment, those portions of a hydrogen storage metal in which a larger amount of hydrogen is occluded and those portions of the hydrogen storage metal in which a smaller amount of hydrogen is occluded can be visualized.

Note that the above-described embodiments and modifications are merely exemplary and that the present invention is not restricted thereto. For example, the embodiments and modifications can be combined appropriately.

The present invention is not restricted to the foregoing embodiments but rather can be implemented in variously modified forms. For example, the present invention embraces configurations (e.g., configurations identical in function and method) which are substantially identical to the configurations described in the above embodiments. Furthermore, the invention embraces configurations which are similar to the configurations described in the above embodiments except that their nonessential portions have been replaced. Further, the invention embraces configurations which are similar to the configurations described in any one of the above embodiments except that a well-known technique is added.

**Claims**

1. An evaluation method comprising the steps of:

   acquiring a backscattered electron spectrum of a sample;
   separating an elastically scattered peak of the backscattered electron spectrum into a plurality of minor peaks by waveform separation and obtaining information about positions and widths of the minor peaks; and
   identifying chemical elements making up the sample from the positions and widths of the minor peaks.

2. An evaluation method as set forth in claim 1, further comprising the step of finding densities of the chemical elements making up the sample from intensities of the minor peaks.

3. An evaluation method as set forth in claim 2, wherein

   in the step of acquiring said backscattered electron spectrum, there is obtained a spectral image in which positions of points of measurement on said sample are associated with the backscattered electron spectrum,
   in the step of separating the elastically scattered peak into the minor peaks, the elastically scattered peak of the backscattered electron spectrum is separated into minor peaks for each of the points of measurement,
   in the step of identifying the chemical elements making up the sample, the elements are identified for each of the points of measurement, and
   in the step of finding the densities of the chemical elements making up the sample, the densities of the chemical elements are found for each of the points of measurement.

4. An evaluation method as set forth in any preceding claim, further comprising the step of obtaining information about a relationship between the position and width of the elastically scattered peak, and wherein in the step of separating the elastically scattered peak into minor peaks, the relationship between the position and width of the elastically scattered peak is a restricting condition.

5. An evaluation method as set forth in claim 4, further comprising the steps of:

   acquiring a reference spectrum that is a backscattered electron spectrum of the sample having a known atomic number;
   finding the position and width of the elastically scattered peak of the reference spectrum;
   correcting a relationship between atomic number and the position of the elastically scattered peak with the position of the elastically scattered peak of the reference spectrum; and

correcting a relationship between atomic number and the width of the elastically scattered peak with the width of the elastically scattered peak of the reference spectrum;

wherein in the step of acquiring information about a relationship between the position and width of the elastically scattered peak, a relationship between the position and width of the elastically scattered peak is found both from the corrected relationship between atomic number and the position of the elastically scattered peak and from the corrected relationship between atomic number and the width of the elastically scattered peak.

6. An analyzer apparatus comprising:

an electron optical system for directing an electron beam at a sample;

an electron energy analyzer for spectrally dispersing and detecting backscattered electrons emitted from the sample; and

a controller for controlling the electron optical system;

wherein the controller performs the steps of acquiring a backscattered electron spectrum of the sample, separating an elastically scattered peak of the backscattered electron spectrum into a plurality of minor peaks by waveform separation, obtaining information about positions and widths of the minor peaks, and identifying chemical elements making up the sample from the positions and widths of the minor peaks.

7. An analyzer apparatus as set forth in claim 6, wherein said controller performs the steps of finding densities of the chemical elements making up the sample from intensities of the minor peaks.

8. An analyzer apparatus as set forth in claim 7, wherein said controller operates, during the step of acquiring said backscattered electron spectrum, (i) to produce a spectral image in which the positions of points of measurement on said sample are associated with said backscattered electron spectrum,

during the step of separating an elastically scattered peak into a plurality of minor peaks by waveform separation, (ii) to separate the elastically scattered peak of the backscattered electron spectrum into a plurality of minor peaks for each of the points of measurement,

during the step of identifying the chemical elements making up the sample, (iii) to identify the chemical elements for each of the points of measurement, and

during the step of finding the densities of the chemical elements making up the sample, (iv) to find the densities of the chemical elements for each of the points of measurement.

FIG. 1

Acquire Information about Relationship between
Atomic Number and Position of Elastically Scattered Peak — S100

Acquire Information about Relationship between
Atomic Number and Width of Elastically Scattered Peak — S102

Acquire Information about Relationship between
Atomic Number and Intensity of Elastically Scattered Peak — S104

Obtain Information about Relationship between
Atomic number and Element Density — S105

Obtain Information about Relationship between
Intensity of Elastically Scattered Peak and Element Density — S106

Acquire Reference Spectrum — S108

Obtain Information about Position and Width of
Elastically Scattered Peak of Reference Spectrum — S110

Correct Relationship between Atomic Number and
Position of Elastically Scattered Peak with
Position of Elastically Scattered Peak of Reference Spectrum — S112

Correct Relationship between Atomic Number and
Width of Elastically Scattered Peak with
Width of Elastically Scattered Peak of Reference Spectrum — S114

Obtain Information about Relationship between Position and
Width of Elastically Scattered Peak — S116

Acquire Backscattered Electron Spectrum of Sample Under Analysis — S118

Separate Backscattered Electron Spectrum of
Sample Under Analysis into Minor Peaks — S120

Identify Elements Making Up Sample Under Analysis — S122

Find Densities of Elements Making Up Sample Under Analysis — S124

FIG. 2

FIG. 3

FIG. 4

FIG. 5

FIG. 6

FIG. 7

FIG. 8

FIG. 9

START

Acquire Reference Spectrum ⌐S200

Obtain Information about Position and
Width of Elastically Scattered Peak ⌐S202

Correct Relationship between Atomic Number and
Position of Elastically Scattered Peak with
Position of Elastically Scattered Peak of Reference Spectrum ⌐S204

Correct Relationship between Atomic Number and
Width of Elastically Scattered Peak with
Width of Elastically Scattered Peak of Reference Spectrum ⌐S206

Find Relationship between Position and
Width of Elastically Scattered Peak ⌐S208

Acquire Backscattered Electron Spectrum of Sample Under Analysis ⌐S210

Separate Backscattered Electron Spectrum of
Sample Under Analysis by Waveform Separation ⌐S212

Identify Elements Making up Sample Under Analysis ⌐S214

Find Densities of Elements Making Up Sample Under Analysis ⌐S216

END

FIG. 10

FIG. 11

**EUROPEAN SEARCH REPORT**

Application Number

EP 25 18 2810

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2016 114547 A (NAT INST ADVANCED IND SCIENCE & TECH) 23 June 2016 (2016-06-23) <br> * paragraph [0015] - paragraph [0021] * <br> * paragraph [0044] - paragraph [0080] * <br> ----- | 1-8 | INV. <br> G01N23/203 |
| X | XU CHUN KAI ET AL: "Nonlinear inelastic electron scattering revealed by plasmon-enhanced electron energy-loss spectroscopy", <br> NATURE PHYSICS, NATURE PUBLISHING GROUP, LONDON, GB, <br> vol. 10, no. 10, <br> 10 August 2014 (2014-08-10), pages 753-757, XP038205729, <br> ISSN: 1745-2473, DOI: 10.1038/NPHYS3051 <br> [retrieved on 2014-08-10] <br> * page 753, left-hand column, line 1 - page 754, right-hand column, line 7; figures 4, 5 * <br> ----- | 1-8 | |

TECHNICAL FIELDS
SEARCHED (IPC)

G01N

The present search report has been drawn up for all claims

| Place of search | Date of completion of the search | Examiner |
|---|---|---|
| The Hague | 6 October 2025 | Stavroulakis, E |

EPO FORM 1503 03.82 (P04C01)

**EP 4 671 749 A1**

## ANNEX TO THE EUROPEAN SEARCH REPORT
## ON EUROPEAN PATENT APPLICATION NO.

EP 25 18 2810

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2025

| Patent document cited in search report | Publication date | Patent family member(s) | Publication date |
|---|---|---|---|
| JP 2016114547 A | 23-06-2016 | JP 6646290 B2 | 14-02-2020 |
| | | JP 2016114547 A | 23-06-2016 |

EPO FORM P0459

For more details about this annex : see Official Journal of the European Patent Office, No. 12/82

**EP 4 671 749 A1**

**Patent documents cited in the description**

- JP 2008123990 A